# EUROPÄISCHE PATENTSCHRIFT

(11) **EP 3 050 136 B1**
(45) Veröffentlichungstag und Bekanntmachung des Hinweises auf die Patenterteilung: **15.11.2017**
(21) Anmeldenummer: 14750315.5
(22) Anmeldetag: 07.08.2014
(51) Int. Cl.: H01M 10/04, H01M 10/0525, H01M 10/0587, H01M 10/058, H01M 2/02

(54) **VERFAHREN ZUM HERSTELLEN EINES BATTERIEMODULS UND BATTERIEMODUL**
METHOD FOR PRODUCING A BATTERY MODULE AND BATTERY MODULE
METHODE DE FABRICATION D'UN MODULE DE BATTERIE ET MODULE DE BATTERIE

(30) Priorität: 27.09.2013 DE 102013016101
(43) Veröffentlichungstag der Anmeldung: 03.08.2016
(73) Patentinhaber: Audi AG, 85045 Ingolstadt (DE)
(72) Erfinder: SCHMIDT, Jörg, 85057 Ingolstadt (DE); ACIKGOEZ, Erdal, 85084 Reichertshofen (DE)
(74) Vertreter: Lehle, Josef
(86) Internationale Anmeldenummer: PCT/EP2014/002174
(87) Internationale Veröffentlichungsnummer: WO 2015/043701

(56) Entgegenhaltungen:
- EP-A1- 0 353 419
- DE-A1-102007 010 751
- GB-A- 1 416 680

## Beschreibung

Die Erfindung betrifft ein Verfahren zum Herstellen eines eine Mehrzahl von Batteriezellen umfassenden Batteriemoduls. Des Weiteren betrifft die Erfindung ein Batteriemodul mit einer Mehrzahl von Batteriezellen.

Zum Bereitstellen von Hochvoltbatterien für Elektrofahrzeuge und Hybridfahrzeuge werden Batteriemodule eingesetzt, welche jeweils eine Mehrzahl von Batteriezellen umfassen. Üblicherweise sind in einem solchen Batteriemodul die Batteriezellen elektrisch miteinander verschaltet und mit einem Pressdruck beaufschlagt, welcher verhindert, dass sich Wände von Zellgehäusen der einzelnen Batteriezellen aufwölben. Häufig werden in solchen Batteriemodulen prismatische Batteriezellen verwendet, die in einer Anordnung nebeneinander stehend und so recht einfach elektrisch miteinander verbunden werden können. Da die prismatischen Batteriezellen üblicherweise Zellgehäuse aus einem Metall aufweisen, ist es notwendig, die Batteriezellen voneinander elektrisch zu isolieren. In bestimmten Betriebszuständen ist zudem eine thermische Isolation der Batteriezellen voneinander vorgesehen. Zum elektrischen und thermischen Isolieren kommen hierbei häufig Kunststoffe zum Einsatz.

Wenn als Trennelemente zwischen den einzelnen Batteriezellen Kunststoffteile verwendet werden, welche auch als Spacer bezeichnet werden, so benötigt man für den Aufbau von Batteriemodulen mit einer Mehrzahl von Batteriezellen viele Einzelteile. Dies ist vergleichsweise aufwändig.

In der DE 10 2010 038 862 A1 ist ein Verfahren zur Herstellung eines Batteriemoduls beschrieben, bei welchem zunächst eine Mehrzahl von Batteriezellen bereitgestellt und dann die Batteriezellen bereits mittels Zellverbindern elektrisch miteinander verschaltet werden. Anschließend wird ein Kunststoffgehäuse des Batteriemoduls angefertigt, indem die einzelnen Batteriezellen mit Kunststoff umspritzt werden. Dadurch werden die Zwischenräume zwischen den Batteriezellen in einem Spritzgießverfahren mit Kunststoff verfüllt, und es wird ein die Gesamtheit der Batteriezellen umschließender Mantel in dem Spritzgießverfahren gefertigt. Es wird also ein einstückiger Kunststoffmantel gebildet, welcher das Batteriemodul nach außen als Gehäuse abgrenzt. Lediglich die Anschlüsse oder Terminals des Batteriemoduls ragen aus dem Kunststoffmantel heraus, so dass sie von außen zugänglich sind.

Ein solches Verfahren ist schwer anzuwenden, wenn die Batteriezellen mit einem Pressdruck beaufschlagt werden müssen, um ein Aufbauchen der Zellgehäuse zu unterbinden. Wenn nämlich die Batteriezellen gegeneinander gepresst vorliegen, so ist es schwierig, in die Zwischenräume zwischen den Batteriezellen den Kunststoff einzubringen. Zudem gestaltet sich das Aushärten des Kunststoffs schwierig, da dies lange Aushärtezeiten erforderlich macht. Ein Erhitzen zum Beschleunigen des Aushärtens ist nämlich nicht durchführbar, da die Batteriezellen keiner entsprechenden Temperaturerhöhung ausgesetzt werden sollten.

Des Weiteren beschreibt die DE 20 2010 004 637 U1 einen Bleiakku, wie er als Starterbatterie in Kraftfahrzeugen zum Einsatz kommt. Der Bleiakku umfasst ein Kunststoffgehäuse mit mehreren Kammern, welche durch Zwischenwandungen gebildet beziehungsweise begrenzt werden. In den Kammern werden Bleiplatten als Elektroden angeordnet. Anschließend wird das Kunststoffgehäuse mit einem bevorzugt als Spritzgussteil ausgebildeten Deckel verschlossen. Über in dem Deckel vorgesehene Einfüllöffnungen wird dann der Elektrolyt in die Batterie eingefüllt, damit diese geladen und entladen werden kann. Bevorzugt sind das Gehäuse und der Deckel aus einem druckstabilen und schlagzähen Kunststoffmaterial wie etwa Polypropylen gebildet.

Aufgabe der vorliegenden Erfindung ist es, ein verbessertes Verfahren zum Herstellen eines Batteriemoduls sowie ein verbessertes Batteriemodul zu schaffen.

Diese Aufgabe wird durch ein Verfahren mit den Merkmalen des Patentanspruchs 1 und durch ein Batteriemodul mit den Merkmalen des Patentanspruchs 9 gelöst. Vorteilhafte Ausgestaltungen mit zweckmäßigen Weiterbildungen der Erfindung sind in den abhängigen Patentansprüchen angegeben.

Das erfindungsgemäße Verfahren zum Herstellen eines eine Mehrzahl von Batteriezellen umfassenden Batteriemoduls umfasst eine Mehrzahl von Schritten. Zunächst wird ein Modulgehäuse des Batteriemoduls bereitgestellt. In das Modulgehäuse wird eine Kernanordnung eingebracht, wobei durch einen jeweiligen Kern der Kernanordnung ein in einer ausgehärteten Vergussmasse vorzusehender Hohlraum definiert wird. Anschließend wird die Vergussmasse in das Modulgehäuse eingebracht. Dann lässt man die Vergussmasse aushärten. Daraufhin wird die Kernanordnung wieder aus dem Modulgehäuse entfernt. Schließlich wird eine Elektrodenanordnung, welche der jeweiligen Batteriezelle zugeordnet ist, in dem Hohlraum angeordnet, welcher in der ausgehärteten Vergussmasse gebildet ist.

Dem liegt die Erkenntnis zugrunde, dass sich das üblicherweise aus Aluminium gebildete Gehäuse einer Batteriezelle auch durch Kunststoff ersetzen lässt, wobei die Batteriezellen voneinander abgrenzende Wandungen durch die ausgehärtete Vergussmasse gebildet werden. Dadurch kann auf das Aluminiumgehäuse verzichtet werden, was Kosten- und Gewichtsvorteile mit sich bringt. Zudem wird die Anzahl der verwendeten Bauteile und Fertigungsschritte im Vergleich zu einem Verfahren deutlich reduziert, bei welchem die einzelnen Batteriezelle unter Zwischenschaltung von Kunststoffteilen verpresst und in einem Modulgehäuse angeordnet werden.

Darüber hinaus bildet das ohnehin als Form zum Einfüllen der Vergussmasse vorzusehende Modulgehäuse dann eine Begrenzungswand des Batteriemoduls. Durch das Aushärten der Vergussmasse in dem Modulgehäuse lässt sich zudem ein besonders kompaktes Batteriemodul bereitstellen, da sich die Vergussmasse mit dem Modulgehäuse verbindet.

Bevorzugt werden durch das Modulgehäuse Wandungen des Batteriemoduls gebildet, welche im Betrieb der Batterie von den Elektrodenanordnungen aufgebrachte Kräfte aufnehmen. Die Elektrodenanordnungen haben nämlich ein Bestreben sich aufzuweiten. Der Grund dafür sind die in den Elektrodenanordnungen beim Laden und Entladen der Batteriezellen auftretenden elektrochemischen Reaktionen. Bei Batteriezellen mit Aluminiumgehäusen sorgen die Wände der Aluminiumgehäuse sowie ein von außen auf einen Stapel der Aluminiumgehäuse aufgebrachter Pressdruck dafür, dass sich die Wände nicht aufwölben können.

Vorliegend verhindert jedoch das Modulgehäuse selber, dass sich die Elektrodenanordnungen im Betrieb aufweiten können. Das Modulgehäuse ist also ausreichend stabil und massiv ausgelegt, sodass es die in den Batteriezellen auftretenden Seitenkräfte aufnehmen kann. Dadurch ist eine Formstabilität des Batteriemoduls sichergestellt, welche insbesondere bei Anordnung des Batteriemoduls in einem Fahrzeug von besonders großer Bedeutung ist.

Als weiter vorteilhaft hat es sich gezeigt, wenn beim Aushärtenlassen die Vergussmasse erhitzt und/oder mit energiereicher Strahlung beaufschlagt wird. Solche Verfahren zum Beschleunigen des Aushärtens der Vergussmasse können vorliegend problemlos zum Einsatz kommen, da sich die empfindlichen Elektrodenanordnungen noch nicht in den in der Vergussmasse zu bildenden Hohlräumen befinden.

Des Weiteren kann beim Aushärtenlassen die Vergussmasse mechanisch belastet werden, um dieser die gewünschten Eigenschaften zu verleihen. Auch solchen mechanischen Belastungen sind nämlich weitere Grenzen gesetzt, als sie vorliegen, wenn sich die Elektrodenanordnungen bereits in den Hohlräumen befinden.

In einer weiteren vorteilhaften Ausgestaltung der Erfindung wird mittels wenigstens eines mit der Elektrodenanordnung verbundenen Deckelelements der die Elektrodenanordnung aufnehmende Hohlraum verschlossen. So wird die Elektrodenanordnung vor äußeren Einflüssen gut abgeschirmt. Zudem ist die Erstellung eines durch die ausgehärtete Vergussmasse im Zusammenwirken mit dem Deckelelement gebildeten Zellgehäuses für die jeweilige Batteriezelle so besonders einfach und aufwandsarm zu bewerkstelligen.

Zum sicheren Versiegeln der jeweiligen Batteriezellen kann das Deckelelement mit durch die ausgehärtete Vergussmasse gebildeten und die jeweiligen Batteriezellen voneinander abgrenzenden Wänden verklebt und/oder verschweißt werden. Insbesondere bei Vorsehen eines durch Wärmeeinwirkung aushärtbaren duroplastischen Kunststoffs als Vergussmasse hat sich ein Verkleben des Deckelelements mit den Wänden als vorteilhaft herausgestellt. Bei Verwendung eines thermoplastischen Kunststoffs als Vergussmasse lässt sich hingegen auch durch Verschweißen besonders gut eine hermetisch dichte Verbindung zwischen dem Deckelelement und den Wänden herstellen.

Von Vorteil ist es weiterhin, wenn nach dem Anordnen der Elektrodenanordnung in dem Hohlraum ein Elektrolyt in die jeweilige Batteriezelle eingebracht wird. Dem liegt die Erkenntnis zugrunde, dass das Bestreben der Elektrodenanordnung sich auszudehnen, sich erst aufgrund der chemischen Reaktionen einstellt, für welche der Elektrolyt in den Batteriezellen vorhanden sein muss. Durch das Einfüllen des Elektrolyten in die jeweilige Batteriezelle erst nach dem Anordnen der Elektrodenanordnung in dem jeweiligen Hohlraum lassen sich daher die Elektrodenanordnung besonders prozesssicher in die Hohlräume einführen.

Bevorzugt wird die Elektrodenanordnung durch einen Wickel und/oder einen Stapel von mit Anodenmaterial und Kathodenmaterial beschichteten Ableiterelementen und das Anodenmaterial von dem Kathodenmaterial trennende Separatoren gebildet. Solche Wickel oder Stapel stellen nämlich eine besonders große chemisch aktive Oberfläche bei kompakten Abmessungen bereit. Der Stapel kann hierfür insbesondere Faltungen aufweisen.

Schließlich hat es sich als vorteilhaft gezeigt, wenn durch das Batteriemodul ein Lithium-Ionen-Akkumulator gebildet wird. Entsprechend sind die einzelnen Batteriezellen als Lithium-Ionen-Zellen ausgebildet, wie sie insbesondere für Batteriemodule von Hochvoltbatterien für Elektrofahrzeuge und Hybridfahrzeuge zum Einsatz kommen. Mit einem solchen Batteriemodul lassen sich nämlich bei vergleichsweise geringem Gewicht entsprechend hohe Spannungen und hohe Ströme bereitstellen.

Das erfindungsgemäße Batteriemodul umfasst eine Mehrzahl von Batteriezellen und ein Modulgehäuse, in welchem eine ausgehärtete Vergussmasse aufgenommen ist. In durch die ausgehärtete Vergussmasse gebildeten Aufnahmeräumen ist hierbei eine der jeweiligen Batteriezelle zugeordnete Elektrodenanordnung angeordnet. Ein solches Batteriemodul zeichnet sich durch eine besonders einfache und an Teilen arme Herstellung aus.

Die für das erfindungsgemäße Verfahren beschriebenen Vorteile und bevorzugten Ausführungsformen gelten auch für das erfindungsgemäße Batteriemodul und umgekehrt.

Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen. Es sind somit auch Ausführungen als von der Erfindung umfasst und offenbart anzusehen, die in den Figuren nicht explizit gezeigt oder erläutert sind, jedoch durch separierte Merkmalskombinationen aus den erläuterten Ausführungen hervorgehen und erzeugbar sind.

Weitere Vorteile, Merkmale und Einzelheiten der Erfindung ergeben sich aus den Ansprüchen, der nachfolgenden Beschreibung bevorzugter Ausführungsformen sowie anhand der Zeichnungen. Dabei zeigen:
- Fig. 1: einen ersten Schritt bei der Fertigung eines Batteriemoduls, in welchem ein leeres Modulgehäuse des Batteriemoduls bereitgestellt wird;
- Fig. 2: das Einbringen einer Kernanordnung in das Modulgehäuse, wobei Kerne der Kernanordnung Hohlräume in einem herzustellenden Kunststoffbauteil definieren;
- Fig. 3: das Einfüllen einer Vergussmasse in das mit der Kernanordnung bestückte Modulgehäuse;
- Fig. 4: die ausgehärtete Vergussmasse in dem Modulgehäuse, welche das Kunststoffbauteil bildet;
- Fig. 5: das Einsetzen eines Zellwickels mit Deckel und elektrischem Pol in einen in der ausgehärteten Vergussmasse bereitgestellten Hohlraum;
- Fig. 6: das Batteriemodul nach dem Einbringen der übrigen Zellwickel mit jeweiligem Deckel in die weiteren Hohlräume; und
- Fig. 7: das Befüllen der einzelnen Batteriezellen des Batteriemoduls mit einem Elektrolyten.

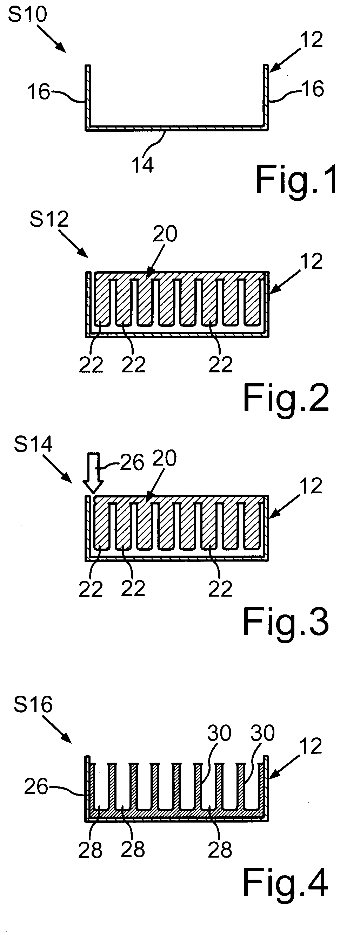

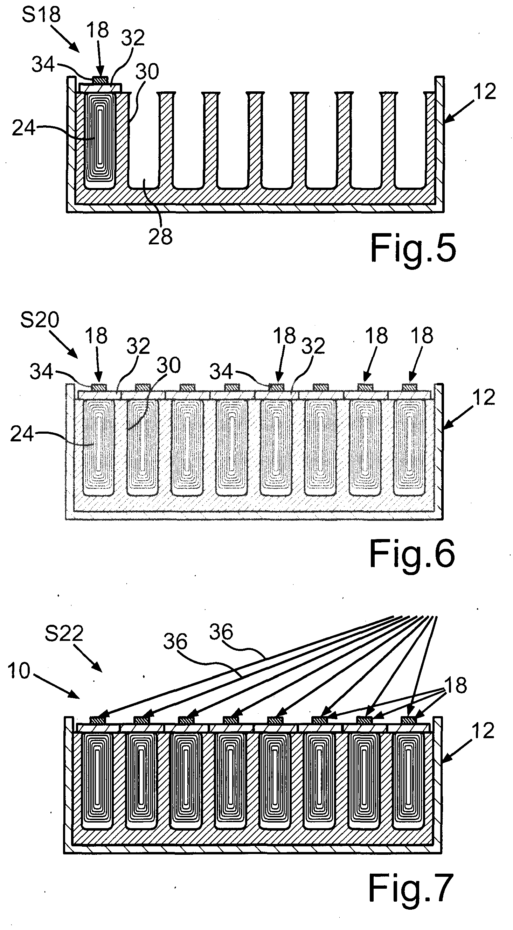

Anhand von Fig. 1 lässt sich ein erster Schritt S10 bei der Fertigung eines in Fig. 7 im Endzustand gezeigten Batteriemoduls 10 veranschaulichen. In dem ersten Schritt S10 wird ein leeres Modulgehäuse 12 bereitgestellt, welches vorliegend einen Boden 14 und Seitenwände 16 aufweist. Dieses Modulgehäuse 12 bildet eine Wandung des fertigen Batteriemoduls 10 (vergleiche Fig. 7). Das Modulgehäuse 12 ist ausreichend stabil, sodass es die in dem Batteriemodul 10 auftretenden Kräfte aufnehmen kann. Diese Kräfte, welche insbesondere auf die Seitenwände 16 des Modulgehäuses 12 wirken, rühren von den chemischen Reaktionen her, welche in einzelnen Batteriezellen 18 des Batteriemoduls 10 stattfinden, wenn das Batteriemodul 10 eine Spannung bereitstellt.

In einem zweiten Schritt S12 (vergleiche Fig. 2) wird in dem Modulgehäuse 12 eine Kernanordnung 20 angeordnet, welche eine Vielzahl von Kernen 22 umfasst. Diese Kerne 22 bilden die negative Form von Elektrodenanordnungen 24 der einzelnen Batteriezellen 18 (vergleiche Fig. 6).

In einem nächsten Schritt S14 (vergleiche Fig. 3) wird eine Vergussmasse 26 in das Modulgehäuse 12 eingefüllt, während die Kernanordnung 20 sich in dem Modulgehäuse 12 befindet. Die Vergussmasse 26 wird durch einen Kunststoff gebildet, welcher die nicht von der Kernanordnung 20 und insbesondere von den Kernen 22 eingenommenen Hohlräume in dem Modulgehäuse 12 ausfüllt.

Anschließend lässt man die Vergussmasse 26 aushärten. Dadurch, dass sich noch keine Elektrodenanordnungen 24 in den Hohlräumen befinden, welche die Kerne 22 in der aushärtenden Vergussmasse 26 hinterlassen, können beim Aushärtenlassen der Vergussmasse 26 Verfahren zum Einsatz kommen, welche für die Elektrodenanordnungen 24 unverträglich sind. So kann das Aushärten der Vergussmasse 26 beispielsweise durch eine Temperaturerhöhung oder das Einbringen energiereicher Strahlung beschleunigt werden.

Nach dem Aushärten der Vergussmasse 26 wird die Kernanordnung 20 wieder aus dem Modulgehäuse 12 entnommen (vergleiche Schritt S16 in Fig. 4). Entsprechend verbleiben in der ausgehärteten Vergussmasse 26 die Hohlräume 28 für die Elektrodenanordnungen 24, welche in Form und Abmessungen denen der Kerne 22 der Kernanordnung 20 entsprechen. Die ausgehärtete Vergussmasse 26 bildet so Wände 30, welche in dem fertigen Batteriemodul 10 die einzelnen Batteriezellen 18 voneinander abgrenzen (vergleiche Fig. 7).

Das Modulgehäuse 12 bildet also nicht nur äußere Wandungen des Batteriemoduls 10, sondern stellt zugleich die Form bereit, in welche die Vergussmasse 26 eingefüllt wird. Beim Aushärten der Vergussmasse 26 verbindet sich diese auch mit dem Modulgehäuse 12.

In einem nächsten, in Fig. 5 veranschaulichten Schritt S18 werden die Elektrodenanordnungen 24 in die jeweiligen Hohlräume 28 eingebracht. Die Elektrodenanordnungen 24 umfassen, wenn die Batteriezelle 18 als Lithium-Ionen-Zelle ausgebildet ist, jeweilige Ableiterfolien, welche mit dem chemischen aktiven Material der Anode und der Kathode beschichtet sind, wobei zwischen dem Kathodenmaterial und dem Anodenmaterial ein elektrisch isolierender Separator angeordnet ist. Da die Elektroden in dieser Elektrodenanordnung gewickelt oder gefaltet vorliegen, wird eine solche Elektrodenanordnung 24 auch als Zellwickel oder Zellstapel bezeichnet.

Vorliegend ist mit jeder Elektrodenanordnung 24 auch ein Deckel 32 verbunden. Aus diesem Deckel 32 treten des Weiteren die elektrischen Pole 34 der jeweiligen Batteriezelle 18 heraus. Durch Zusammenschalten der elektrischen Pole 34, von denen in Fig. 5 lediglich einer schematisch gezeigt ist, lässt sich die von dem Batteriemodul 10 bereitstellbare Stromstärke und die von dem Batteriemodul 10 bereitstellbare Spannung je nach Wunsch einstellen. So lassen sich aus mehreren Batteriemodulen 10 beispielsweise Fahrzeugbatterien für Elektrofahrzeuge und Hybridfahrzeuge bilden, welche als Hochvoltbatterien ausgebildet sind. Zum Verschließen des Hohlraums 28 nach dem Einbringen der Elektrodenanordnung 24 in den Hohlraum 28 wird der Deckel 32 mit den die Batteriezellen 18 voneinander abgrenzenden Wänden 30 verklebt oder verschweißt.

In Fig. 6 ist ein weiterer Schritt S20 bei der Fertigung des Batteriemoduls 10 veranschaulicht, in welchem alle Deckel 32 die jeweiligen Hohlräume 28 verschließen. Entsprechend ist durch die einzelnen Deckel 32 der jeweiligen Batteriezellen 18 eine mehr oder weniger durchgängige Deckeleinheit gebildet, aus welcher lediglich die Pole 34 der einzelnen Batteriezellen 18 hervortreten.

Anhand von Fig. 7 ist ein weiterer Schritt S22 veranschaulicht, in welchem ein Elektrolyt 36 über entsprechende, in jedem Deckel 32 vorgesehene Befüllöffnungen in die jeweilige Batteriezelle 18 eingebracht wird. Erst nach dem Befüllen der Batteriezellen 18 mit dem Elektrolyten 36 können die elektrochemischen Reaktionen einsetzen, welche dafür sorgen, dass das Batteriemodul 10 elektrische Energie speichern und abgeben kann. Nach dem Befüllen der Batteriezellen 18 mit dem Elektrolyten 36 bauen sich in den Batteriezellen 18 auch die Seitenkräfte auf, welche von dem Modulgehäuse 12 des Batteriemoduls 10 aufgenommen werden.

## Patentansprüche

1. Verfahren zum Herstellen eines eine Mehrzahl von Batteriezellen (18) umfassenden Batteriemoduls (10) mit den Schritten:
- Bereitstellen (S10) eines Modulgehäuses (12);
**gekennzeichnet durch** die Schritte:
- Einbringen (S12) einer Kernanordnung (20) in das Modulgehäuse (12), wobei durch einen jeweiligen Kern (22) der Kernanordnung (20) ein in einer ausgehärteten Vergussmasse (26) vorzusehender Hohlraum (28) derart definiert wird, dass die Vergussmasse (26) eine abgrenzende Wandung einer der Batteriezelle (18) zugeordneten Elektrodenanordnung (24) bildet;
- Einbringen (S14) der Vergussmasse (26) in das Modulgehäuse (12);
- Aushärtenlassen der Vergussmasse (26);
- Entfernen der Kernanordnung (20) aus dem Modulgehäuse (12); und
- Anordnen (S18) einer der jeweiligen Batteriezelle (18) zugeordneten Elektrodenanordnung (24) in dem in der ausgehärteten Vergussmasse (26) gebildeten Hohlraum (28).

2. Verfahren nach Anspruch 1,
**dadurch gekennzeichnet, dass**
das Modulgehäuse (12) Wandungen des Batteriemoduls (10) bildet, welche im Betrieb des Batteriemoduls (10) von den Elektrodenanordnungen (24) aufgebrachte Kräfte aufnehmen.

3. Verfahren nach Anspruch 1 oder 2,
**dadurch gekennzeichnet, dass**
beim Aushärtenlassen die Vergussmasse (26) erhitzt und/oder mit energiereicher Strahlung beaufschlagt und/oder mechanisch belastet wird.

4. Verfahren nach einem der Ansprüche 1 bis 3,
**dadurch gekennzeichnet, dass**
mittels wenigstens einem mit der Elektrodenanordnung (24) verbundenen Deckelelement (32) der die Elektrodenanordnung (24) aufnehmende Hohlraum (28) verschlossen wird (S18).

5. Verfahren nach Anspruch 4,
**dadurch gekennzeichnet, dass**
das Deckelelement (32) mit durch die ausgehärtete Vergussmasse (26) gebildeten und die jeweiligen Batteriezellen (18) voneinander abgrenzenden Wänden (30) verklebt und/oder verschweißt wird.

6. Verfahren nach einem der Ansprüche 1 bis 5,
**dadurch gekennzeichnet, dass**
nach dem Anordnen der Elektrodenanordnung (24) in dem Hohlraum (28) ein Elektrolyt (36) in die jeweilige Batteriezelle (18) eingebracht wird (S22).

7. Verfahren nach einem der Ansprüche 1 bis 6,
**dadurch gekennzeichnet, dass**
die Elektrodenanordnung (24) durch einen Wickel und/oder einen, insbesondere Faltungen aufweisenden, Stapel von mit Anodenmaterial und mit Kathodenmaterial beschichteten Ableiterelementen und das Anodenmaterial von dem Kathodenmaterial trennenden Separatoren gebildet wird.

8. Verfahren nach einem der Ansprüche 1 bis 7,
**dadurch gekennzeichnet, dass**
durch das Batteriemodul (10) ein Lithium-Ionen-Akkumulator gebildet wird.

9. Batteriemodul mit einer Mehrzahl von Batteriezellen (18) und einem Modulgehäuse (12), in welchem eine ausgehärtete Vergussmasse (26) aufgenommen ist, wobei in durch die ausgehärtete Vergussmasse (26) gebildeten Aufnahmeräumen eine der jeweiligen Batteriezelle (18) zugeordnete Elektrodenanordnung (24) angeordnet ist,
**dadurch gekennzeichnet, dass**
die Vergussmasse (26) eine abgrenzende Wandung der Elektrodenanordnung (24) bildet, welche der Batteriezelle (18) zugeordnet ist, wobei die Elektrodenanordnung (24) durch einen Wickel und/oder Stapel von jeweiligen Ableiterfolien, welche mit einem Kathodenmaterial und mit einem Anodenmaterial beschichtet sind, und zwischen dem Kathodenmaterial und dem Anodenmaterial angeordneten elektrisch isolierenden Separatoren gebildet ist, wobei die Wandungen eines Gehäuses der jeweiligen Batteriezelle(18) durch Kunststoff in Form der ausgehärteten Vergussmasse (26) gebildet sind.

## Claims

1. Method for producing a battery module (10) which comprises a plurality of battery cells (18), having the steps of:
- providing (S10) a module housing (12);
**characterised by** the steps of:
- introducing (S12) a core arrangement (20) into the module housing (12), wherein by means of a respective core (22) of the core arrangement (20) a hollow space (28) which is intended to be provided in a hardened casting compound (26) is defined in such a manner that the casting compound (26) forms a delimiting wall of an electrode arrangement (24) which is associated with the battery cell (18);
- introducing (S14) the casting compound (26) into the module housing (12);
- allowing the casting compound (26) to harden;
- removing the core arrangement (20) from the module housing (12); and
- arranging (S18) an electrode arrangement (24) which is associated with the respective battery cell (18) in the hollow space (28) which is formed in the hardened casting compound (26).

2. Method according to claim 1,
**characterised in that**
the module housing (12) forms walls of the battery module (10) which, during operation of the battery module (10), absorb forces which are applied by the electrode arrangements (24).

3. Method according to claim 1 or 2,
**characterised in that**
when left to harden the casting compound (26) becomes heated and/or is acted on with energy-rich radiation and/or is mechanically loaded.

4. Method according to any one of claims 1 to 3,
**characterised in that**
by means of at least one covering element (32) which is connected to the electrode arrangement (24) the hollow space (28) which receives the electrode arrangement (24) is closed (S18).

5. Method according to claim 4,
**characterised in that**
the covering element (32) is adhesively bonded and/or welded to walls (30) which are formed by the hardened casting compound (26) and which delimit the respective battery cells (18) from each other.

6. Method according to any one of claims 1 to 5,
**characterised in that**
after the arrangement of the electrode arrangement (24) in the hollow space (28) an electrolyte (36) is introduced (S22) into the respective battery cell (18).

7. Method according to any one of claims 1 to 6,
**characterised in that**
the electrode arrangement (24) is formed by means of a winding and/or a stack of deflector elements which are coated with anode material and cathode material, which stack in particular has folds, and separators which separate the anode material from the cathode material.

8. Method according to any one of claims 1 to 7,
**characterised in that**
a lithium ion accumulator is formed by the battery module (10).

9. Battery module having a plurality of battery cells (18) and a module housing (12) in which a hardened casting compound (26) is received, wherein in receiving spaces formed by the hardened casting compound (26) an electrode arrangement (24) which is associated with the respective battery cell (18) is arranged,
**characterised in that**
the casting compound (26) forms a delimiting wall of the electrode arrangement (24), which is associated with the battery cell (18), wherein the electrode arrangement (24) is formed by means of a winding and/or stack of respective deflection films which are coated with a cathode material and an anode material, and electrically insulating separators which are arranged between the cathode material and the anode material, wherein the walls of a housing of the respective battery cell (18) are formed by means of plastics material in the form of the hardened casting compound (26).

## Revendications

1. Procédé de fabrication d'un module de batterie (10) comprenant plusieurs cellules de batterie (18) avec les étapes :
- fourniture (S10) d'un boîtier de module (12) ;
**caractérisé par** les étapes :
- introduction (S12) d'un agencement de noyau (20) dans le boîtier de module (12), une cavité (28) à prévoir dans une masse de remplissage durcie (26) étant définie de telle sorte par un noyau respectif (22) de l'agencement de noyau (20) que la masse de remplissage (26) forme une paroi de délimitation d'un agencement d'électrode (24) associé à la cellule de batterie (18) ;
- introduction (S14) de la masse de remplissage (26) dans le boîtier de module (12) ;
- durcissement de la masse de remplissage (26) ;
- retrait de l'agencement de noyau (20) hors du boîtier de module (12) ; et
- mise en place (S18) d'un agencement d'électrode (24) associé à la cellule de batterie (18) respective dans la cavité (28) formée dans la masse de remplissage durcie (26).

2. Procédé selon la revendication 1, **caractérisé en ce que** le boîtier de module (12) forme des parois du module de batterie (10) qui absorbent des forces appliquées par les agencements d'électrodes (24) lors du fonctionnement du module de batterie (10).

3. Procédé selon la revendication 1 ou 2, **caractérisé en ce que**, lors du durcissement, la masse de remplissage (26) est chauffée et/ou est soumise à un rayonnement riche en énergie et/ou est soumise à une charge mécanique.

4. Procédé selon l'une des revendications 1 à 3, **caractérisé en ce que** la cavité (28) logeant l'agencement d'électrode (24) est fermée (S18) au moyen d'au moins un élément formant couvercle (32) assemblé à l'agencement d'électrode (24).

5. Procédé selon la revendication 4, **caractérisé en ce que** l'élément formant couvercle (32) est collé et/ou soudé à des parois (30) formées par la masse de remplissage durcie (26) et délimitant les cellules de batterie respectives (18) les unes par rapport aux autres.

6. Procédé selon l'une des revendications 1 à 5, **caractérisé en ce que**, après la mise en place de l'agencement d'électrode (24) dans la cavité (28), un électrolyte (36) est introduit (S22) dans la cellule de batterie (18) respective.

7. Procédé selon l'une des revendications 1 à 6, **caractérisé en ce que** l'agencement d'électrode (24) est formé par un enroulement et/ou une pile, comportant en particulier des plis, d'éléments conducteurs revêtus d'un matériau d'anode et d'un matériau de cathode et de séparateurs séparant le matériau d'anode du matériau de cathode.

8. Procédé selon l'une des revendications 1 à 7, **caractérisé en ce qu'**un accumulateur lithium-ion est formé par le module de batterie (10).

9. Module de batterie avec plusieurs cellules de batterie (18) et avec un boîtier de module (12) dans lequel est logée une masse de remplissage durcie (26),
dans lequel un agencement d'électrode (24) associé à la cellule de batterie (18) respective est placé dans des espaces de logement formés par la masse de remplissage durcie (26),
**caractérisé en ce que** la masse de remplissage (26) forme une paroi de délimitation de l'agencement d'électrode (24) qui est associée à la cellule de batterie (18), l'agencement d'électrode (24) étant formé par un enroulement et/ou une pile de feuilles conductrices respectives qui sont revêtues avec un matériau de cathode et avec un matériau d'anode et de séparateurs isolés électriquement et agencés entre le matériau de cathode et le matériau d'anode, les parois d'un boîtier de la cellule de batterie respective (18) étant formées par du plastique sous forme de masse de remplissage durcie (26).
